# EUROPEAN PATENT SPECIFICATION

(11) **EP 1 951 969 B1**
(45) Date of publication and mention of the grant of the patent: **20.01.2010**
(21) Application number: 06779586.4
(22) Date of filing: 29.09.2006
(51) Int. Cl.: E04F 11/18, F16B 7/04

(54) **A CONNECTOR APPARATUS FOR RELEASABLY CONNECTING TOGETHER TWO COMPONENTS, SUCH AS A NEWEL POST AND A NEWEL BASE, AND METHOD**
VERBINDERVORRICHTUNG ZUM LÖSBAREN VERBINDEN ZWEITER KOMPONENTEN WIE EINES SPINDELPFOSTENS UND EINER SPINDELBASIS UND VERFAHREN
APPAREIL ET PROCEDE DE CONNEXION POUR CONNECTER L'UN A L'AUTRE DEUX COMPOSANTS DE MANIERE DETACHABLE, TELS QU'UN PILASTRE ET UNE BASE DE PILASTRE

(30) Priority: 12.10.2005 GB 0520765
(43) Date of publication of application: 06.08.2008
(73) Proprietor: Cheshire Mouldings & Woodturnings Limited, Sutton St Helens WA9 4JQ (GB)
(72) Inventor: CARNEY, John, Cheshire WA4 4BD (GB)
(74) Representative: Fearnside, Andrew Simon
(86) International application number: PCT/GB2006/003639
(87) International publication number: WO 2007/042757

(56) References cited:
- DE-U1- 8 708 852
- GB-A- 2 176 822
- GB-A- 2 406 106
- US-A- 4 108 422

## Description

The present invention relates to a connector apparatus and method for connecting together two components, and particularly, though not exclusively, a connector apparatus for connecting together two parts of a newel of a staircase.

Staircase assemblies typically include a newel formed in two parts. A lower part, or base part, of the newel arranged to be fixed to a base of the staircase, and an upper part, or newel post, arranged to be attached to the staircase handrail. Usually, the newel base comprises a block or section having an opening, recess or bore formed in its upper surface. The newel post is then typically provided with an insert part at its lower end shaped and arranged to be received and secured within the opening of the newel base part. In order to firmly fix or secure the newel post to the newel base part, the insert portion of the newel post is often provided with a series of scores or cuts radiating outwardly from the centre of its surface lowermost in use. The point from which these scores radiate is positioned to align directly above a wedge-shaped projection pointing upwardly from the bottom of the opening in the newel base. By pressing the lower most part of the insert portion of the newel post against the wedge, the base of the insert is caused to splay - separating along the radial cuts - thereby increasing the diameter of the insert and causing it to urge against the walls of the opening in the newel base. This action causes the insert of the newel post to securely fix within the opening of the newel base. Glue is typically used to further secure this fixture.

This arrangement merely provides an irreversible means of connecting a newel post to a newel base. However, this method prevents subsequent disassembly or removal of a newel from an assembled staircase such as may be required when the newel obstructs the transport of large items up or down the staircase. Such obstructions are often encountered when moving furniture into or out of houses, or when transporting large items of office furniture or equipment around office premises or the like. Document GB2406106 discloses a fixing assembly for connecting two halves of a newel post. The assembly involves a bolt passing through a through-hole.

The present invention aims to address at least some of the aforementioned problems and deficiencies apparent in the prior art.

At its most general, the present invention proposes a connector apparatus for reversibly connecting together two components in a quick, simple and convenient manner in which a connector part attachable to one component may be quickly and easily inserted to, or extracted from, a clamp at the other component without suffering obstruction by the assembled clamp. Accordingly, the clamp may preferably be constructed in such a way to enable insertion and/or retraction of connector parts to be clamped thereby, without requiring disassembly of the clamp in order to enable such insertion or retraction. This greatly increases the ease and simplicity with which the connector parts and clamp may be joined and separated thereby to secure and release, respectively, two components such as a newel post and newel base.

In a first aspect the present invention may provide a connector apparatus for securing together two components and including:
a coupling means arranged to be secured to a first of said two components;
a clamp means arranged to be disposed within a second of said two components to be accessible by said coupling means and having two clamp parts assembleable to be disposed at different (e.g., opposite) sides of said coupling means by a linkage means adapted to link said two clamp parts to releasably clamp one or both clamp parts to the coupling means thereby to releasably secure the two components together wherein the linkage means of the clamp is adapted to be disposed adjacent the coupling means in use to permit insertion or release (e.g. retraction) of the coupling means from the assembled clamp means without obstruction thereby wherein a clamp part or parts are arrangable to obstruct retraction of the coupling means from the clamp, in use.

Accordingly, two components may be releasably secured (preferably fixed) together by clamping to a coupling means secured to a first component a clamp means disposed within the second component such that the clamp means is not retractable from the second component together with the coupling means when clamped thereto: but, release of the coupling means from the clamp means (e.g., for retraction from the second component) is permitted without disassembly of the clamp means. This enables simple, quick and easy release and retraction, and also quick and easy clamping (or re-clamping) of the assembled clamp means to the coupling means when securing the two components together. Only a clamp part or both clamp parts are arranged to obstruct release/retraction of the coupling means from the clamp, in use, while the linkage means is arranged to not so obstruct.

The clamp means may be arranged to be disposed within a bore, recess or cavity of the second component. The connector apparatus may include the second component. The second component may include an access aperture or opening via which the bore, recess or cavity is accessible by the coupling means. In this way, the clamp means may be accessible by the coupling means when disposed within the bore, recess or cavity of the second component in use. The access aperture or opening may define a further bore extending transversely to the direction of the aforesaid bore in which the clamp means is arranged to be received. The further bore may intersect the aforesaid bore.

The clamp means is preferably dimensioned so as to present to the access aperture or opening, in use, a dimension (e.g., area, length or breadth etc) exceeding the lateral dimension of that aperture or opening thereby to prevent the clamp means from being extractable from the second component via the access aperture or opening. Preferably, the clamp means is dimensioned or arranged to prevent its passage though the access aperture or opening when assembled.

The clamp means, when clamped to the coupling means and disposed within the second component, may anchor the coupling means to the second component and thereby secure (e.g., fix) the second component to the first component secured to the coupling means. This anchorage is releasable without disassembly of the coupling means.

The clamp means may include two clamp parts each separate from (but receivable within) the second component. The clamp means may comprise a first clamp part separate from (but receivable within) the second component, and a second clamp part being part of (or integral with) the second component itself. For example, the second clamp part may be a surface (e.g., terminal wall) or fixed part within the bore, recess or cavity of the second component within which the first clamp part is arranged to be received (e.g., when assembling the clamp).

The first clamp part may be linkable with the surface or fixed part forming the second clamp part by the linkage means thereby to assemble the clamp means. The second clamp part may be arranged so that it does not clamp to the coupling means when the clamp is clamped to the coupling means, but provides a means via which the first clamp part may be clamped against the coupling means: e.g., by providing a base towards which the first clamp part may be drawn or urged using the linkage means thereby to urge the first clamp part against the coupling means placed between the two.

Preferably the clamp means is arranged such that, when assembled, the linkage means is disposed at places other than between a part of the coupling means and a region between the clamp parts through which said part of the coupling means must pass to retract the coupling means from the assembled clamp means.

The linkage means preferably is adapted to releasably clamp both clamp parts to said coupling means. The linkage means may interconnect the clamp parts.

The linkage means may be adapted to be disposed adjacent said coupling means in use such that the coupling means is releasable from the interconnected clamp parts without obstruction by the linkage means.

The positioning of the linkage means in the assembled clamp means may be any position not crossing, coinciding or otherwise obstructing the direction along which the coupling means is moveable to separate from the clamp means when the latter is unclamped from the former. The clamp means may be assembleable to define a space or volume across which the clamp parts face or oppose each other and into which the coupling means is retractably receivable/insertable for clamping by the clamp means. Preferably the linkage means does not extend into this space or volume. The linkage means is preferably arranged such that the clamp means only engage or clamp the coupling means generally at one side of the linkage means, and preferably the clamp parts do not clamp the coupling means at opposite sides of the linkage means. Most preferably, the linkage means is arranged to be disposed within the assembled clamp means, in use, at places other than places between a given part of the coupling means and parts of the space or volume between the clamp parts though which the given part of the coupling means must pass to retract the coupling means from the clamp means. This ensures that the linkage means will not obstruct release or retraction of the coupling means from the assembled clamp means.

One or both clamp part(s) has preferably an abutment part adapted to abut an opposing part of the coupling means when clamped thereto. Preferably, the linkage means is arranged such that the coupling means is disposable between an abutment part and the linkage means when between the clamp parts in use. In this arrangement, when, for example, the coupling means is inserted downwardly into the assembled clamp means, between the opposing clamp parts, the linkage means is disposed "below" the coupling means when viewed in this frame of reference. This ensures that the linkage means cannot obstruct "downward" insertion or "upward" retraction of the coupling means from the unclamped (but assembled) clamp means.

The clamp means may have a wedge means adapted to wedge (or be wedgeable) in use between and against a surface of the coupling means and a surface of the second component which is closer to the first component than is the part of said surface of the coupling means against which the wedge is wedged/or wedgeable thereby to fix the two components together.

Thus, when the assembled clamp means is clamped to the coupling means, it may effectively lock the coupling means within the second component within which the clamp means is disposed, the wedge means serving to prevent/obstruct retraction or release of the coupling means from the clamp means. The clamp part(s) may have tapered/angled portions arranged to close against and/or over the coupling means in use such that progressively thicker portions of the wedge are drawn into the region between the said surface of the coupling means and the said surface of the second component as the clamp parts are drawn towards each other in use. Preferably the wedge means is shaped such that, in being drawn into said region between the surface of the coupling means and the second component, the coupling means is urged away from the said surface of the second component (e.g., further into the bore of the second component containing the clamp means). In this way, the coupling means, and the first component secured to it, may be urged/drawn into or towards the second component by action of the wedge means of the clamp being drawn/urged towards the coupling means. This enables a strengthening of fixture between the first and second components.

Preferably the linkage means is operable to draw one clamp part closer to the other clamp part thereby to wedge said wedge means in use between and against surfaces of the coupling means and the second component.

The linkage may be a threaded shaft (e.g., a screw) or the like, arranged to engage a threaded bore in a second of the two clamped parts while extending through an aperture, opening or bore of the first of the two clamp parts, the linkage having a head part dimensioned to prevent its passage through the aperture, opening or bore of the first clamp part thereby to retain the other clamp part on the shaft. Thus, appropriate turning of the shaft of the linkage means may (e.g. reversibly) draw the shaft into the threaded bore of the second clamped part and thus draw the head of the shaft towards the second clamp part. The result is to draw the retained first clamp part towards the second clamp part.

The connector apparatus may be arranged such that the linkage means is operable to draw one clamp part closer to the other clamp part and at least one clamp part has an abutment part adapted to abut an opposing part of the coupling means when clamped thereto, wherein at least one of the abutment part and the opposing part has a surface shaped such that, by action of said drawing by the linkage means, the abutment part is drawn across the opposing part thereby to push the coupling means towards said second component.

Thus, the coupling means may have a surface inclined to the direction in which the coupling means is urged to move by the drawing together of clamp parts. Alternatively, the surface of the clamp part(s) may be so inclined (e.g., wedge shaped as in the wedge means) to produce this effect. The surfaces of both the coupling means and the opposing clamp surfaces may be so inclined to this effect. The shaping of the (or both) abutment part of the clamp part or (and) the opposing part of the coupling means is preferably such that the direction in which the coupling means is urged is transverse to the direction in which the clamp parts are drawn together to produce said urging. The opposing surface of the coupling means presented to the abutment part may be flat or concave or convex. The abutment part may be flat or convex or concave.

The coupling means may have a connecting part arranged to be secured to said one of said two components attached to an expanded part arranged to be received by the clamp means. The clamp parts of the clamp means are preferably shaped and adapted to at least partly surround the expanded part when clamped thereto.

The expanded part may define a head (e.g., terminal head) of the coupling means about/against which the clamp is arranged to close in use. The clamp means may be arranged to clamp, in use, against multiple parts of the head extending over regions thereof at least partly circumscribing the head. This enables the head of the coupling means to be clamped from multiple opposing sides to increase regions or extent of clamping interface between clamp and head.

The linkage means may be operable to draw one clamp part closer to the other clamp part and one or both clamp part(s) may be deformable so as to expand in a direction transverse to the direction of said drawing by action of clamping to the coupling means.

The clamp means may be arranged to be disposed in a bore of said second component, and said one or both clamp part(s) may be arranged to expand such that the expanded part(s) thereof press or are pressable in use against said bore thereby to grip said bore thereat.

By action of the clamping of a clamp part(s) to the coupling means, the urging force applied to the clamp part(s) to affect clamping may act to deform the clamp part(s) to expand in a direction transverse to the urging force. Preferably the bore, recess or opening within the second component, within which the clamp means is arranged to be disposed, has a lateral dimension less than the transverse dimension to which the clamp means is arranged to expand by action of said clamping. As a result, the clamp, in use, may expand laterally to grip the bore, recess or opening of the second component within which it is disposed. The invention may provide an assembly including the aforesaid connector assembly and the second component. Clamp part(s) may be arranged to expand substantially in all directions radial and transverse to the urging force. Alternatively, the clamp part(s) may be arranged to expand in only some transverse directions, but not in others.

The one or both clamp part(s) may include a resiliently deformable portion arranged so as to be squashed in a direction parallel to the direction of said drawing by action of clamping to the coupling means, and to expand outwardly of the clamp part(s).

The deformable portion (or portions) may be disposed between non-deformable portions of the clamp part(s). The non-deformable clamp parts may be arranged to be moveable and/or urgeable together by action of said clamping thereby to squash and deform the deformable parts therebetween. The deformable parts may be rubber, or any suitably rubbery material. The clamp parts(s) may be substantially wholly (or mostly) formed of such deformable material.

The one or both clamp part(s) may have a first portion moveably engaged with a second portion and a resiliently deformable third portion disposed within a space between the first and second portions and being deformable to protrude outwardly of the clamp portions by urging the first and second portions together to reduce said space.

Thus, by action of clamping the clamp part(s) to the coupling means, the first portion of the clamp part may be moved/urged towards the second portion thereof so as to cause the third portion to protrude outwards/beyond the periphery of the first and second portions thereby to provide a means of gripping the inner surface of the bore, opening or recess in the second component.

The third portion is preferably arranged so as to not protrude outwardly of the clamp portions when the first and second portions of the clamp part(s) are not urged together.

The clamp means may present one or more tooth means (e.g., pointed protrusions or corrugations) from a surface thereof arranged to be urged against an inner surface of the bore, opening or recess of a second component within which the clamp means is arranged to be disposed in use. The tooth means preferably grip the inner bore surface when the clamp means is clamped to the coupling means in use (e.g., a surface against which the clamp is arranged to be urged by action of said clamping). The consequence of such a gripping of the inner surface of the bore, opening or recess of the second component, in use, whether by means of teeth or deformably expanding clamp portions, is to better prevent any twisting, turning or rotating movement of any clamp part relative to the direction in which the two clamp parts may be drawn together (or apart) by the linkage means. The preferable consequence is that substantially the only significant movement of clamp parts is in the direction of draw, such that the clamp parts remain in suitably opposed relation to each other, and to the coupling means, in use, during the act of clamping.

In a second aspect, the invention may provide an apparatus including said connector apparatus and said second component according to the invention in its first aspect in which the said second component includes a bore adapted to receive the clamp means therein to be accessible by said coupling means. The bore of the second component may include a channel formed in a surface thereof and extending along at least a part of the length of the bore, and the clamp means may have a projection arranged to be received in the channel when the clamp is clamped to the coupling means in use.

Thus, positioning of the projection within the channel prevents twisting/tuming/rotating of clamp portions when drawn together by the linkage means. It is to be noted that when the linkage means is provided in the form of a screw, or the like, the twisting action of the screw may urge a corresponding twisting action in one or more of the clamped parts.

One or both clamp parts may have a guide member protruding therefrom and e.g. offset from the linkage means, being arranged to be received within a bore provided in the other clamp part when the clamp is in the assembled state. The guide member is preferably retractably insertable into the bore thereby to guide the movement of one clamp part relative to the other. The guide member may comprise a rod or shaft having an end dimensioned to be tightly received within a bore provided in one clamp part, e.g. by an interference fit therewith, and having another end arranged to be slidably receivable or received in a bore of the other clamp parts, the two bores being disposed to align and oppose each other when the clamp is assembled or in use.

The guide member may ensure that opposing clamp parts remain in a desired opposed relation/orientation in the assembled clamp means both in the clamped state and in the quiescent state in which the coupling means is released or retractable from the assemble clamp means.

The coupling means may have any suitable means for enabling its securement to the first component as would be readily apparent to the skilled person (e.g. screw thread for use with a nut).

In a third of its aspects, the invention may provide an apparatus including the connector apparatus according to any of the first and second aspects and including said two components.

The said first component is preferably a newel post and the said second component is preferably a newel base arranged to be connected to the newel post. The invention may provide a kit of parts including apparatus as described above, in disassembled form.

In a fourth aspect the invention may provide a connector apparatus according to any preceding aspect, and in assembled or disassembled form.

It is to be understood that the assemblies described above embody methods of securing together two components, and such methods are encompassed within the scope of this invention. In a fifth aspect, the invention may provide a method of securing together two components and including:
securing a coupling means to a first of said two components;
disposing a clamp means within a second of said two components to be accessible by said coupling means and having two clamp parts;
disposing the clamp parts at opposite sides side of said coupling means;
with a linkage means, linking said two clamp parts to releasably clamp one or both clamp parts to the coupling means thereby to releasably secure the two components together wherein the linkage means of the clamp is disposed adjacent the coupling means in use to permit insertion or release (e.g., retraction) of the coupling means from the assembled clamp means without obstruction thereby wherein a clamp part or both clamp parts are arranged to obstruct retraction of the coupling means from the clamp. The method may include disposing the linkage means at places other than between a part of the coupling means and a region between the clamp parts through which said part of the coupling means must pass to retract the coupling means from the assembled clamp means.

Preferably, the method includes interconnecting said clamp parts with said linkage means to releasably clamp both clamp parts to said coupling means.

The method may include disposing the linkage means adjacent said coupling means such that the coupling means is insertable and/or releasable from the interconnected clamp parts without obstruction by the linkage means.

Providing the clamp means with wedge means may be included in the method, and wedging the wedge means between and against surface of the coupling means and a surface of the second component which is closer to the first component than is said surface of the coupling means thereby to fix the two components together. The method may include drawing one clamp part closer to the other clamp part thereby to wedge said wedge means in use between and against surfaces of the coupling means and the second component.

The method may include providing at least one clamp part with an abutment part adapted to abut an opposing part of the coupling means when clamped thereto, and providing at least one of the abutment part and the opposing part with a surface, drawing one clamp part closer to the other clamp part such that the abutment part is drawn across the opposing part thereby to push the coupling means towards said second component.

Included in the method may be: providing the coupling means with a connecting part attached to an expanded part; securing the connecting part to said first components; receiving the expanded part in the clamp means; at least partly surrounding the expanded part with the clamp parts when clamped thereto.

The method may include including providing one or both clamp part(s) to be deformable, and urging one clamp part closer to the other clamp part to clamp the clamp means to the coupling means and so as to cause one or both clamp parts to expand in a direction transverse to the direction of said urging by action of clamping to the coupling means.

Preferably, the method includes providing one or both clamp parts with a guide member protruding therefrom and offset from the linkage means, and retractably inserting the guide member into a bore provided in the other clamp part thereby to guide the movement of one clamp part relative to the other.

Preferably, the method includes providing one or both clamp part(s) with an abutment part, abutting the abutment part to an opposing part of the coupling means when clamping the clamp means thereto, and disposing the coupling means between an abutment part and the linkage means when between the clamp parts.

The method may include providing in said second component a bore adapted to receive the clamp means therein to be accessible by said coupling means, providing a channel in a surface of the bore of the second component extending along at least a part of the length of the bore, providing the clamp means with a projection, and receiving the projection in the channel when the clamp is clamped to the coupling means in use.

In the method, preferably the said first component is a newel post and the said second component is a newel base arranged to be connected to the newel post.

There now follow descriptions of non-limiting embodiments of the invention with reference to the accompanying drawings in which:
Figure 1 illustrates a connector apparatus in disassembled form;
Figure 2A illustrates a view of the connector apparatus of Figure 1 in assembled form;
Figure 2B illustrates a view of the connector apparatus of Figure 1 in assembled form and viewed in a direction transverse to the view of Figure 2A;
Figure 2C illustrates a view of the connector apparatus of Figure 2A in cross-section along the view AA shown in figure 2B;
Figure 2D illustrates a magnified view of the clamp and coupling head of the assembled connector apparatus of Figure 2C;
Figure 3 illustrates an exploded view of a clamp means and the guide means therefor;
Figure 4 illustrates the components of Figure 3 in assembled form;
Figure 5 schematically illustrates, in cross-section, an assembly comprising a newel base releseably secured to a newel post via an assembled connector apparatus;
Figure 6 schematically illustrates the urging of a coupling head towards a newel base in which is disposed a clamp, the urging occurring by action of the drawing of the two parts of the clamp together;
Figure 7A illustrates an assembled connector apparatus side view;
Figure 7B illustrates the assembled connector apparatus of Figure 3A in oblique view;
Figure 8 illustrates a part of a second component, a bore in the second component into which a clamp means of an embodiment of the invention is arranged to be disposed, the bore possessing a guide channel;
Figure 9A illustrates a connector apparatus in assembled form with a clamp means possessing a deformable part;
Figure 9B illustrates the connector apparatus of Figure 5A in which the clamp is in a clamped state and the resiliently deformable part is resiliently deformed by action of such clamping;
Figure 10 illustrates, in cross-section, apparatus including connector apparatus having a clamp with a toothed upper surface urged upwardly against an upper inner surface of the bore of a second component within which it is received, the urging being caused by action of the clamping of the clamp to the coupling head of a coupling member.

In the following, like articles are assigned like reference symbols.

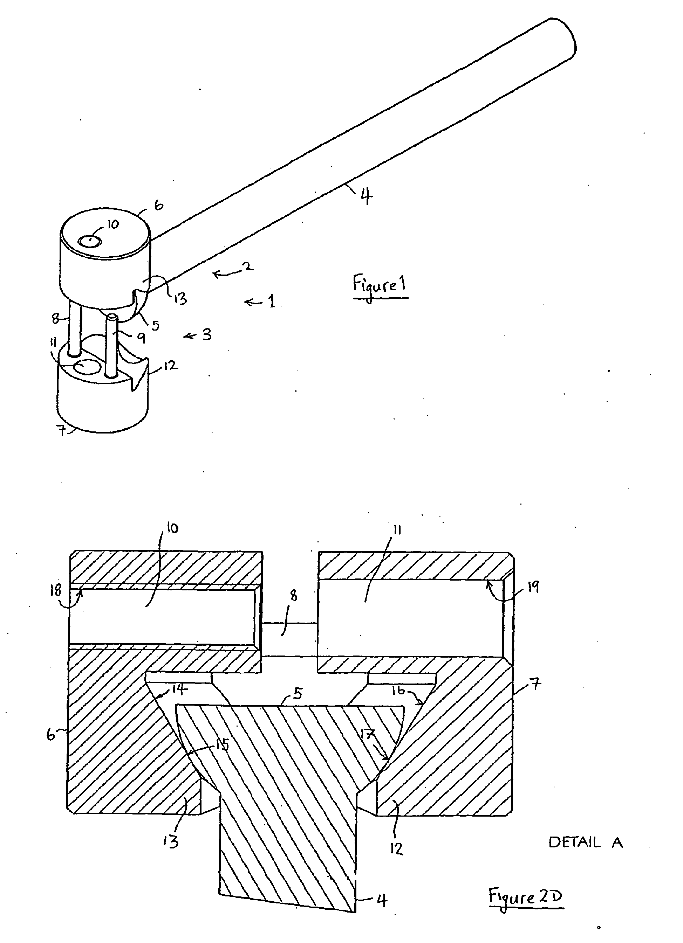

Figure 1 illustrates a connector apparatus 1 in partially assembled form. The connector apparatus includes a coupling means 2 comprising a rod 4 at one end of which is formed an expanded portion defining a coupling head 5. The connector apparatus also includes a clamp 3 including a first clamp part 6 and a second clamp part 7 arranged to collectively clamp against substantially opposite sides of the coupling head 5 of the coupling means in use. Each clamp part (6, 7) of the clamp possesses a wedge portion (13, 12 respectively) arranged in the clamp parts so as to oppose each other in the assembled clamp and to wedge against and cover parts of the coupling head when clamped thereto. Two guide rods (8, 9) extend outwardly, in parallel, of the body of one of the clamp parts (7) and are each arranged to be separately slidingly and retractably receivable in a respective bore formed in an opposing face of the other of the two clamp parts (6) in use thereby to allow the other clamp part to slide to and fro along the two guide rods (8, 9) towards and away from the clamp part (7) from which the guide rods extend. Thus, the first and second clamp parts, together with the two guide rods, define, when assembled, a barrel assembly forming a clamp in which one clamp part may be slidably moved towards or away from the other clamp part in closing or opening the clamp respectively.

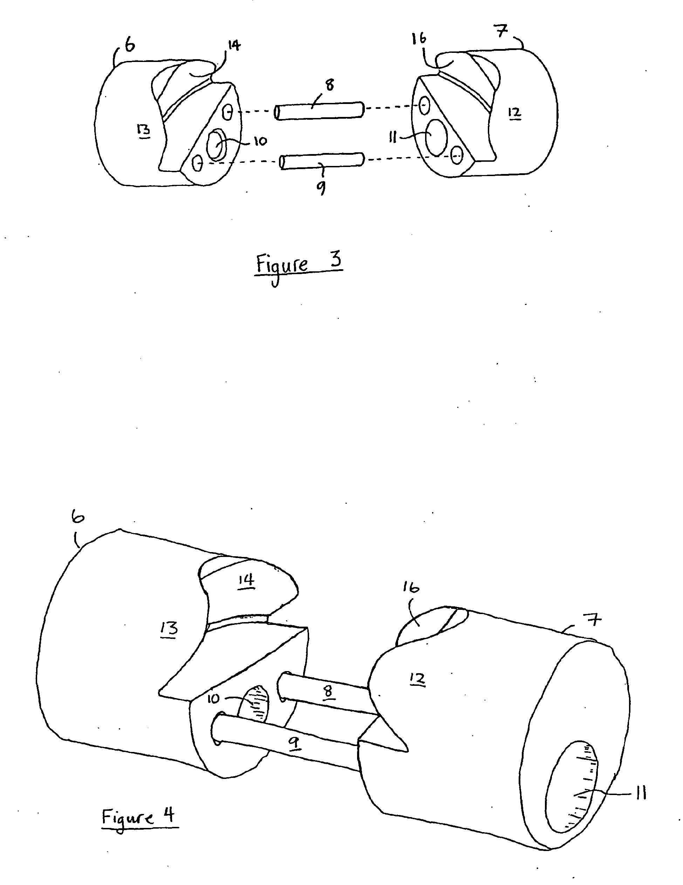

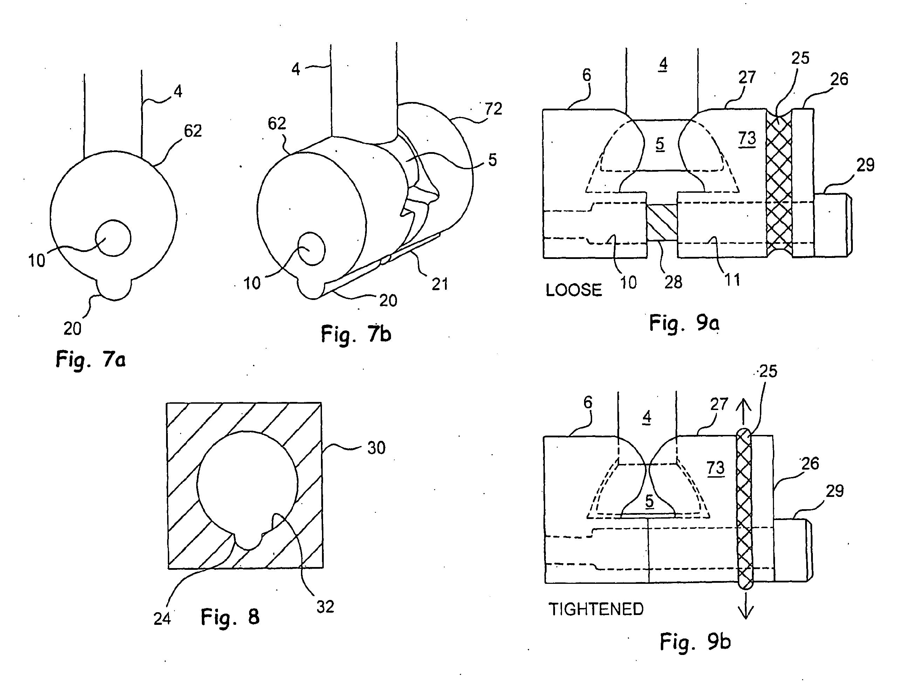

Figures 3 and 4 illustrate the aforementioned components of the clamp defined by the barrel assembly in pre-assembled form (Figure 7) and assembled form (Figure 8).

Adjacent the wedge parts (12, 13) of each clamp part is provided a linkage bore (11, 10) dimensioned to receive a linkage means (not shown) in the form of a threaded screw for the purposes of linking the two clamp parts together to releasably clamp the clamp parts to the coupling head. The bore in one of the clamp parts (7) is dimensioned to receive a linkage screw (not shown) in a loose fit, but to prevent passage therethrough of the head of the linkage screw. Conversely, the linkage bore (10) in the other of the clamp parts (6) is provided with a threading adapted to receive the threading on the linkage screw. The linkage bores in each of the two clamp parts are positioned to mutually align collinearly when the clamp is assembled. In this way, with a first clamp part (6) slidably amounted on the guide rods (8, 9) of the second clamp part (7), a linkage screw may be inserted into the unthreaded linkage bore of the second clamp part at the outwardly facing opening of that linkage bore. The linkage screw may be pushed so as to extend completely through the unthreaded bore, to extend outwardly of the other end thereof and to engage with the threaded bore (10) in the first clamp part (6). An appropriate turning of the linkage screw thereafter causes the linkage screw to be drawn into the threaded bore until such time as the head of the linkage screw engages with the outwardly facing surface of the second clamp part (7) peripheral to the opening of the unthreaded linkage bore (11) therein. Subsequent continued turning of the linkage screw (in the same sense as previously) further draws the linkage screw into the threaded bore (10) of the first clamp part but in doing so the second clamp part (7) is drawn towards the first clamp part and the wedge portions (12, 13) of the clamp parts are consequently drawn together as the clamp progressively closes.

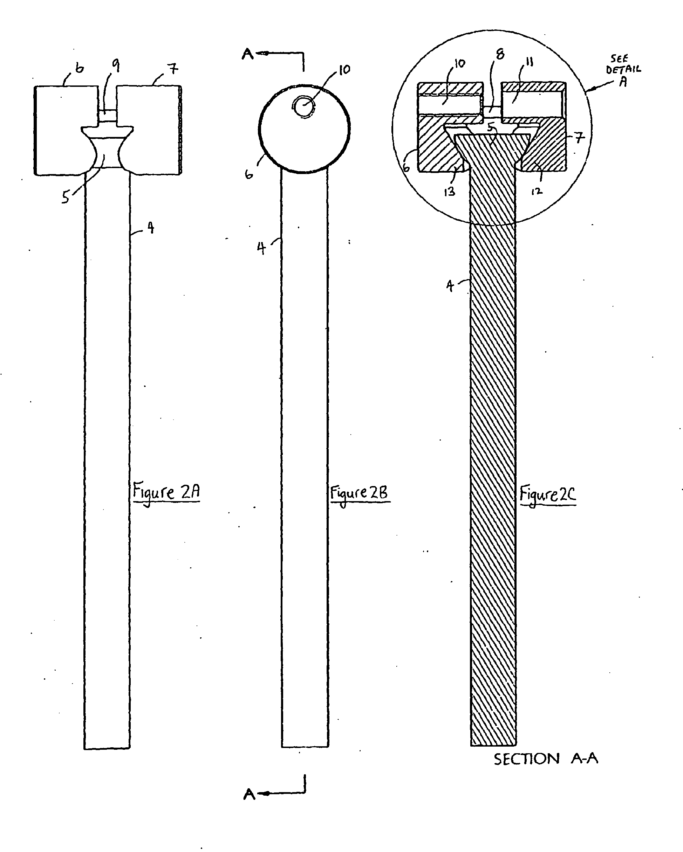

Figures 2A, 2B and 2C illustrate the connector assembly in an assembled state with the barrel assembly clamp clamped to the coupling head of the coupling means. In these drawings, the linkage screw is not shown in order to enable clarity. Figure 2A illustrates a side view of the assembled coupling apparatus, while Figure 2B shows a view of another side of the apparatus at 90° to the view illustrated in Figure 2A.
Figure 2C illustrates a cross-sectional view along the axis AA indicated in Figure 2B. Figure 2D illustrates detail A in magnified scale showing the assembled clamp assembly (linkage screw not shown) clamped about the coupling head of the coupling means.

Referring to Figure 2D the inner surface (19) of the unthreaded linkage bore enables a linkage screw (not shown) engaged with the threaded inner surface (18) of the linkage bore of the first clamp part (6) to be turned without gripping the linkage bore surface (19) of the second clamp part (7). This enables the linkage screw to turn within that linkage bore without the thread thereof substantially urging any turning force on the second clamp part (7). The linkage bores (10, 11) of the two clamp parts are disposed within the clamp barrel assembly to enable the coupling head (5) of the coupling means to be quickly and easily inserted and/or extracted from the opened clamp without suffering obstruction by the linkage screw, and without requiring disassembly of the clamp. The linkage bore are disposed such that the linkage screw, in use, is positioned adjacent the coupling head, in use, to permit its insertion of release from the assembled clamp means without obstruction by the linkage screw. In the assembled clamp, the linkage screw (not shown) is thereby disposed at places other than places between any part of the coupling head (5) and any region between the clamp parts through which the coupling head must pass to retract from the assembled clamp.

Each of the first and second clamp parts (6, 7) possesses a wedge part (13, 12 respectively) each defining a concavely curved abutment surface (14, 16 respectively) inclined or angled to the direction in which the two clamp parts are to be drawn together by the linkage screw. The angle of inclination is acute (e.g., about 60°) thereby defining a volume, or "mouth", between opposing abutment surfaces of the clamp parts, which is substantially conical (or part conical) in shape and dimension to expand in a direction towards the linkage bores and linkage screw and transverse to the axis of the linkage bores.

When located within the mouth of the clamp, the coupling head 5 presents to the opposing abutment surfaces of the clamp a convex substantially hemispherical surface (15, 17 respectively). The coupling head is shaped to hemispherically expand within the mouth of the clamp generally along the same direction in which the mouth expands. Consequently, the abutment surfaces are able to abut the convex surface of the coupling head and collectively to at least partly envelop the coupling head. Furthermore, by action of drawing the two clamp parts together, using the linkage screw, the abutment surfaces may be drawn together thereby to reduce the volume of the clamp mouth and force the coupling head towards those parts of the clamp mouth still able to accommodate it. In this way, the abutment surfaces may be drawn across the parts of the coupling head against which they abut (or vice versa) thereby to push the coupling head further into the conical volume of the mouth of the clamp.

The wedge portions of the two clamp parts may thus not only be positioned to prevent retraction of the coupling head from the clamp, but may be drawn together by the linkage screw so as to urge the coupling head further into the clamp.

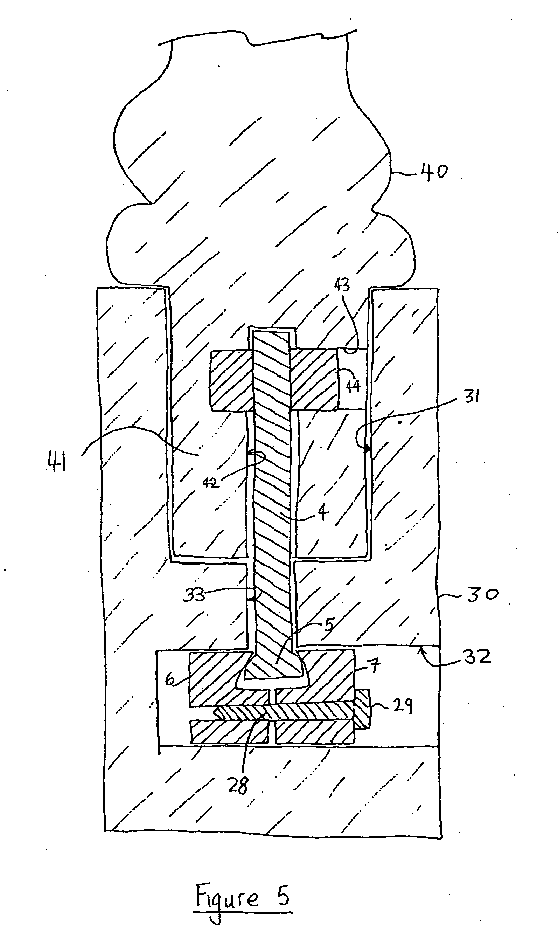

Figure 5 illustrates a cross-sectional view of the connector apparatus in use securing a newel post 40 to a newel base 30.

The end of the newel post 40 lowermost in use possesses an insert dowel 41 dimensioned to be closely fitted within an insert socket 31 formed in a surface of the newel base 30 uppermost in use. A coupling rod 4 of the connector apparatus is disposed within a coupling bore 42 formed within the dowel 41 of the newel post, and positioned to align with a coupling bore 33 formed within the bottom of the insert socket 31 of the newel base. The opening of the coupling bore in the dowel aligns with the opening of the coupling bore in the insert socket base.

The shaft of the coupling rod 4 is disposed within the coupling bore of the insert dowel and is secured therein by a barrel nut 44 disposed within the insert dowel and into which the threaded end of the coupling rod uppermost in use is securely screwed. The barrel nut 44 is dimensioned such that it cannot pass along the coupling bore 42 of the insert dowel. A length of the coupling rod terminating with the coupling head 5 extends outwardly beyond the opening of the coupling bore in the lowermost part of the dowel insert, and extends into the coupling bore 33 formed within the bottom of the insert socket 31. The coupling bore of the insert socket extends into the newel base so as to terminate (and open into) a clamp bore 32 extending into the newel base from a side thereof in a direction transverse to the direction of the coupling bore. The clamp bore accommodates an assembled clamp (6, 7, 28), and the coupling head.

The clamp parts (6, 7) of the clamp are interconnected via a linkage screw 28 which engages threading provided within the innermost clamp part 6 but is freely rotatable within the other clamp part 7. The clamp is clamped to the coupling head 5 of the coupling rod such that the coupling head cannot be retracted therefrom. The clamp is dimensioned to prevent it passing into or along the coupling bore 33 of the newel base. Accordingly, the assembled connector apparatus releasably secures the newel post 40 to the newel base 30 by releasably clamping the clamp to the coupling head. Release of the coupling head from the clamp is permitted by adjusting the separation of the clamp parts using the linkage screw to open the mouth thereof to allow the coupling head to be retracted unobstructed, yet without disassembly of the clamp - i.e., the clamp parts remain interconnected by the linkage screw for rapid reclosure if desired.

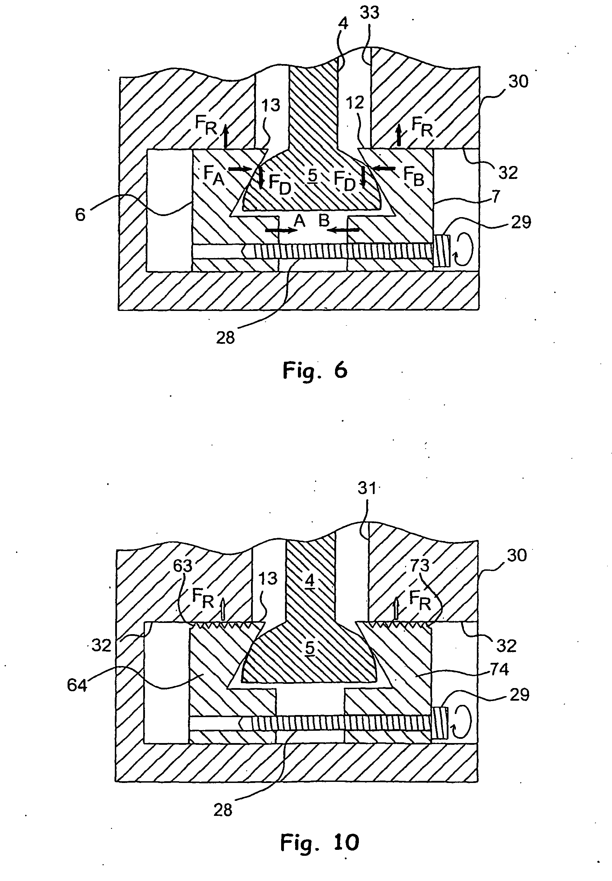

Figure 6 schematically illustrates the preferable manner of clamping and securement of the clamp and the coupling head of the connector apparatus. Each clamp part (6,7) has a wedge portion (13, 12) as discussed above. Each wedge portion is wedged between and against a respective surface of the coupling head 5 and a respective surface (e.g., surface uppermost in use) of the clamp bore 32 which is closer to the newel post than is the respective surface of the coupling head against which the relevant wedge portion is abutted. The wedge portions thereby obstruct retraction of the coupling head from the clamp and from the clamp bore. The linkage screw 28 is turnable to reversibly draw the two clamp parts together (in directions A and B) to further wedge an increasing thickness of each wedge portion between the coupling head 5 and the uppermost wall of the clamp bore 32. In doing so, the point(s) of interface between the convex outer surface of the coupling head, and the inclined abutting surface of the wedge portions of respective clamp parts, is forced to move across the abutting wedge surfaces away from the uppermost surface of the clamp bore and towards the lowermost surface thereof. This occurs increasingly as increasing quantities of wedge portion are forced between the coupling head and the surface of the clamp bore uppermost in use. In this way, the drawing together of the inclined wedge surfaces in directions A and B, respectively, induces an urging force (F_{A},F_{B}) at the wedge/coupling head interface. A component Fo of these urging forces is directed into the coupling bore as a result of the inclination of the interfacing wedge and coupling head surfaces. A reactive force F_{R} is also produced, being directed oppositely to force F_{D}. The reactive force F_{R} is rendered static by the presence of the surface of the clamp bore, uppermost in use, against which the clamp is wedged, while forces F_{D} are not static. Thus, the clamp parts are urged against the uppermost surface of the clamp bore 32, and the coupling head is urged into that bore, by action of the drawing the two clamp parts together using the linkage screw. In this way, an urging force F_{D} may be provided to permanently wedge the coupling rod, and the newel post fixed to it, towards the newel base. This secures and fixes the two newel components together firmly, but releasably.

Figures 7A and 7B show a side and oblique view, respectively, of an assembled connector apparatus, with a clamp clamped to the coupling head 5 of a coupling shaft 4. Each of the first and second clamp parts (62, 72 respectively) has a ridge projection (20, 21) formed in the outer surface thereof lowermost in use, and projecting outwardly thereof. Each ridge projection extends along the outer surface of the respective clamp part in a direction parallel to the axis of the general barrel/cylinder shape of the assembled clamp, and each ridge aligns collinearly with the other in the assembled clamp.

As shown in Figure 8, in a view along/down the clamp bore axis, the surface of the clamp bore 32 of the newel base 30, lowermost in use, is provided with a guide channel 24 therein and extending along the axis of the clamp bore. The clamp bore 32 is dimensioned to receive the assembled clamp such that when the clamp is urged against the bore surface uppermost in use, the ridge projections (20, 21) of each clamp part are snugly received within the guide channel 24. The result is to resist any urge imposed on the clamp to twist about the axis of the clamp bore when in use therein, and enables the clamp to be inserted therein in an orientation and position which will present the mouth of the clamp directly "upwardly" - e.g., to present the clamp mouth to the coupling head - without guesswork.

Figures 9A and 9B illustrate an alternative clamp structure in which the clamp part 73 nearmost the head 29 of the linkage screw 28 in use is provided in three portions. The first portion 26 is moveably joined to a second portion 27 by an intermediate resiliently deformable third portion 25. The third portion is formed of rubber, or some suitably rubbery material, and is shaped to define a section or slice of the clamp part (i.e. it is generally disc shaped, or ring shaped) and is disposed in the region defined between the opposing first and second clamp portions. Each of the first, second and third portions of the clamp part have linkage bores aligned to collectively define the linkage bore 11 of the clamp part 73. The third portion is deformable to allow movement between the first and second portions in directions parallel to the axis of the linkage bore 11. The third portion 25 is sufficiently deformable, and is disposed in the region between the first and second portions at places sufficiently close to the adjacent outermost surfaces of the latter two portions, (as shown in Figure 9A, when in the quiescent state) such that pressing the first portion of the clamp 26 towards the second portion therefore 27 (or vice versa) may cause parts of the material of the third portion 25 to squash radially outwardly (in the manner illustrated in Figure 9B) of the outermost surface of the clamp part 73 so as to protrude therefrom. The closing of the clamp and clamping to the coupling head may provide this squashing action, the result being that the protruding parts of the third portion of the clamp part 73 may urge against, and grip, the walls of the clamp bore within which the clamp is intimately received in use. This prevents a twisting movement of the clamp part such as may be urged by turning the linkage screw 28.

Figure 10 schematically illustrates a further example of a coupling apparatus of the type described above, but further provided with pointed corrugations or teeth (53, 73) arrayed upon respective surfaces of the two clamp parts (54, 74 respectively) uppermost in use so as to be urged against parts of the surface of the clamp bore uppermost in use when the clamp is clamped to the coupling head 5 as described above.

The reactive force F_{R} described above with reference to Figure 6 urges the pointed tooth corrugations (53, 73) into a gripping interface with the opposing clamp bore surface 32 thereby to enable the clamp parts (64, 74) to grip that surface and inhibit the twisting motion which may by urged upon those parts by the turning of the linkage screw 28. Once more, this feature, as with the features illustrated with reference to figure 7A to Figure 9B, is advantageous in enabling the clamp parts and the assembled clamp to resist a twisting motion urged upon them by the turning of the linkage screw 28 during a process of clamping, which may cause the mouth of the clamp to become misaligned with the coupling means, or may cause one clamp part to become misaligned with the other. These features may become particularly advantageous when, in alternative embodiments, the guide rods (8,9) described above, are omitted.

The following paragraphs describe further aspects of the invention:
1. A method of releasably securing together two components including:
   securing a coupling means to a first of said two components;
   disposing a clamp means within a second of said two components to be accessible by said coupling means and having two clamp parts;
   disposing the clamp parts at opposite sides side of said coupling means;
   with a linkage means, linking said two clamp parts to releasably clamp one or both clamp parts to the coupling means thereby to releasably secure the two components together wherein the linkage means of the clamp is disposed adjacent the coupling means in use to permit insertion and/or release of the coupling means from the assembled clamp means without obstruction thereby.
2. A method according to paragraph 1 including disposing the linkage means in use at places other than between a part of the coupling means and a region between the clamp parts through which said part of the coupling means must pass to retract the coupling means from the assembled clamp means.
3. A method according to any of paragraphs 1 to 2 including interconnecting said clamp parts with said linkage means to releasably clamp both clamp parts to said coupling means.
4. A method according to paragraph 3 including disposing the linkage means adjacent said coupling means such that the coupling means is releasable from the interconnected clamp parts without obstruction by the linkage means.
5. A method according to any of paragraphs 1 to 4 including providing the clamp means with wedge means and wedging the wedge means between and against surface of the coupling means and a surface of the second component which is closer to the first component than is said surface of the coupling means thereby to fix the two components together.
6. A method according to paragraph 5 including drawing one clamp part closer to the other clamp part thereby to wedge said wedge means in use between and against surfaces of the coupling means and the second component.
7. A method according to any of paragraphs 1 to 6 including providing at least one clamp part with an abutment part adapted to abut an opposing part of the coupling means when clamped thereto, and providing at least one of the abutment part and the opposing part with a surface, drawing one clamp part closer to the other clamp part such that the abutment part is drawn across the opposing part thereby to push the coupling means towards said second component.
8. A method according to any of paragraphs 1 to 7 including providing the coupling means with a connecting part attached to an expanded part; securing the connecting part to said first components; receiving the expanded part in the clamp means; at least partly surrounding the expanded part with the clamp parts when clamped thereto.
9. A method according to any of paragraphs 1 to 8 including providing one or both clamp part(s) to be deformable, and urging one clamp part closer to the other clamp part to clamp the clamp means to the coupling means and so as to cause one or both clamp parts to expand in a direction transverse to the direction of said urging by action of clamping to the coupling means.
10. A method according to any of paragraphs 1 to 9 including providing one or both clamp parts with a guide member protruding therefrom and offset from the linkage means, and retractably inserting the guide member into a bore provided in the other clamp part thereby to guide the movement of one clamp part relative to the other.
11. A method according to any of paragraphs 1 to 10 including providing one or both clamp part(s) with an abutment part, abutting the abutment part to an opposing part of the coupling means when clamping the clamp means thereto, and disposing the coupling means between an abutment part and the linkage means when between the clamp parts.
12. A method according to any of paragraphs 1 to 11 including providing in said second component a bore adapted to receive the clamp means therein to be accessible by said coupling means, providing a channel in a surface of the bore of the second component extending along at least a part of the length of the bore, providing the clamp means with a projection, and receiving the projection in the channel when the clamp is clamped to the coupling means in use.
13. A method according to any of paragraphs 1 to 12 in which the said first component is a newel post and the said second component is a newel base arranged to be connected to the newel post.

It is to be understood that modifications and variations of the embodiments described above, such as would be readily apparent to the skilled worker, are encompassed within the scope of this invention, and that the embodiments described herein are not intended to be limiting.

## Claims

1. A connector apparatus (1) for securing together two components (30,40) and including:
a coupling means (2) arranged to be secured to a first (40) of said two components;
a clamp means (3) arranged to be disposed within a second (30) of said two components to be accessible by said coupling means and having two clamp parts (6,7) assembleable to be disposed at different sides of said coupling means by a linkage means (28) adapted to link said two clamp parts to releasably clamp one or both clamp parts to the coupling means thereby to releasably secure the two components together, **characterised in that** the linkage means (28) of the clamp means (3) is adapted to be disposed adjacent the coupling means in use to permit insertion or release of the coupling means (2) from the assembled clamp means (3) without obstruction thereby, wherein a clamp part or both clamp parts (6,7) are arrangable to obstruct retraction of the coupling mean (2) from the clamp, in use.

2. A connector apparatus according to any preceding claim in which the clamp means is arranged such that, when assembled, the linkage means (28) is disposed at places other than between a part of the coupling means and a region between the clamp parts through which said part of the coupling means must pass to retract the coupling means from the assembled clamp means.

3. A connector apparatus according to any preceding claim in which said linkage means (28) is adapted to releasably clamp both clamp parts to said coupling means.

4. A connector apparatus according to any preceding claim in which said clamp means has a wedge means (12,13) adapted to wedge in use between and against a surface (15,17) of the coupling means and a surface of the second component (30) which is closer to the first component (40) than is said surface of the coupling means thereby to fix the two components (30,40) together.

5. A connector apparatus according to claim 4 in which the linkage means (28) is operable to draw one clamp part closer to the other clamp part thereby to wedge said wedge means in use between and against surfaces of the coupling means (2) and the second component (30).

6. A connector apparatus according to any preceding claim in which the linkage means (28) is operable to draw one clamp part closer to the other clamp part and at least one clamp part (6,7) has an abutment part (14,16) adapted to abut an opposing part of the coupling means when clamped thereto, wherein at least one of the abutment part and the opposing part has a surface shaped such that, by action of said drawing by the linkage means, the abutment part is drawn across the opposing part thereby to push the coupling means towards said second component (30).

7. A connector apparatus according to any preceding claim in which the coupling means (2) has a connecting part (4) arranged to be secured to said one of said two components attached to an expanded part (5) arranged to be received by the clamp means, and the clamp parts (6,7) of the clamp means are shaped and adapted to at least partly surround the expanded part (5) when clamped thereto.

8. A connector apparatus according to any preceding claim in which the linkage means (28) is operable to draw one clamp part closer to the other clamp part and one or both clamp part(s) (6,7) are deformable (25) so as to expand in a direction transverse to the direction of said drawing by action of clamping to the coupling means.

9. A connector apparatus according to claim 8 in which the clamp means is arranged to be disposed in a bore (32) of said second component (30), and said one or both clamp part(s) (6,7;64,74) is arranged to expand such that the expanded part(s) thereof are pressable in use against said bore thereby to grip said bore thereat.

10. A connector apparatus according to any of claims 8 or 9 in which the one or both clamp part(s) (6,7) includes a resiliently deformable portion (25) arranged so as to be squashed in a direction parallel to the direction of said drawing by action of clamping to the coupling means, and to expand outwardly of the clamp part(s).

11. A connector apparatus according to any of claims 8 to 10 in which the one or both clamp part(s) (6,7) has a first portion moveably engaged with a second portion and a resiliently deformable third portion (25) disposed within a space between the first and second portions and being deformable to protrude outwardly of the clamp portions by urging the first and second portions together to reduce said space.

12. A connector apparatus according to claim 11 in which the third portion (25) is arranged so as to not protrude outwardly of the clamp portions when the first and second portions of the clamp part(s) are not urged together.

13. A connector apparatus according to any preceding claim in which one or both clamp parts (6,7) has a guide member (8, 9) protruding therefrom and offset from the linkage means (28), being arranged to be received within a bore provided in the other clamp part when the clamp is in the assembled state, the guide member being retractably insertable into the bore thereby to guide the movement of one clamp part relative to the other.

14. A connector apparatus according to any preceding claim in which one or both clamp part(s) (6,7) has an abutment part adapted to abut an opposing part of the coupling means when clamped thereto, the linkage means being arranged such that the coupling means is disposable between an abutment part and the linkage means when between the clamp parts in use.

15. An apparatus comprising said connector apparatus (1) and said second component (30) according to any preceding claim in which the said second component includes a bore (32) adapted to receive the clamp means therein to be accessible by said coupling means, the bore of the second component including a channel (24) formed in a surface thereof and extending along at least a part of the length of the bore, wherein the clamp means has a projection (20,21) arranged to be received in the channel when the clamp is clamped to the coupling means in use.

16. An apparatus including the connector apparatus according to any preceding claim 1 to 14 and including said two components (30, 40).

17. An apparatus according to claim 1 in which the said first component (40) is a newel post and the said second component (30) is a newel base arranged to be connected to the newel post.

18. An apparatus according to any preceding claim in assembled form.

19. A method of releasably securing together two components (40,30) including:
securing a coupling means (2) to a first (40) of said two components;
disposing a clamp means (3) within a second (30) of said two components to be accessible by said coupling means and having two clamp parts (6,7) ;
disposing the clamp parts at opposite sides of said coupling means;
with a linkage means (28), linking said two clamp parts to releasably clamp one or both clamp parts to the coupling means thereby to releasably secure the two components together **characterised** such that the linkage means of the clamp means is disposed adjacent the coupling means in use to permit insertion and/or release of the coupling means from the assembled clamp means without obstruction thereby, wherein a clamp part or both clamp parts (6,7) are arranged to obstruct retraction of the coupling means from the clamp, in use.

20. A stair rail apparatus including an apparatus according to any of claims 1 to 18.

21. A kit of parts including apparatus according to any of claims 1 to 18 or 20.

22. A stair rail according to claim 20 in assembled form.

## Patentansprüche

1. Verbindervorrichtung (1) zum Befestigen von zwei Komponenten (30, 40) aneinander, die enthält:
eine Kopplungseinrichtung (2), die so eingerichtet ist, dass sie an einer ersten (40) der zwei Komponenten befestigt wird;
eine Klemmeinrichtung (3), die so eingerichtet ist, dass sie in einer zweiten (30) der zwei Komponenten so angeordnet wird, dass sie für die Kopplungseinrichtung zugänglich ist, und die zwei Klemmteile (6, 7) hat, die mittels einer Verbindungseinrichtung (28), die so eingerichtet ist, dass sie die zwei Klemmteile so verbindet, dass einer oder beide Klemmteil/e lösbar an der Kopplungseinrichtung festgeklemmt wird/werden, um so die zwei Komponenten lösbar aneinander zu befestigen, so zusammengesetzt werden können, dass sie an verschiedenen Seiten der Kopplungseinrichtung angeordnet sind, **dadurch gekennzeichnet, dass** die Verbindungseinrichtung (28) der Klemmeinrichtung (3) so eingerichtet ist, dass sie in Funktion an die Kopplungseinrichtung angrenzend angeordnet ist, um Einführen der Kopplungseinrichtung (2) in die zusammengesetzte Klemmeinrichtung (3) oder Lösen derselben davon ohne Behinderung durch diese ermöglicht, wobei ein Klemmteil oder beide Klemmteile (6, 7) so angeordnet werden kann/können, dass er/sie in Funktion Herausziehen der Kopplungseinrichlung (2) aus der Klemmeinrichtung behindert/behindern.

2. Verbindervorrichtung nach einem der vorangehenden Ansprüche, wobei die Klemmeinrichtung so eingerichtet ist, dass, wenn sie zusammengesetzt ist, die Verbindungseinrichtung (28) an anderen Positionen als zwischen einem Teil der Kopplurigseinrichtung und einem Bereich zwischen den Klemmteilen angeordnet ist, durch den der Teil der Kopplungseimichtung hindurchtreten muss, um die Kopplungseinrichlung aus der zusammengesetzten Klemmeinrichtung herauszuziehen.

3. Verbindervorrichtung nach einem der vorangehenden Ansprüche, wobei die Verbindungseinrichtung (28) so eingerichtet ist, dass sie beide Klemmteile lösbar an der Kopplungseinrichtung festklemmt.

4. Verbindervorrichtung nach einem der vorangehenden Ansprüche, wobei die Klemmeinrichtung Keileinrichtungen (12, 13) aufweist, die so eingerichtet sind, dass sie in Funktion zwischen einer Fläche (15, 17) der Kopplungseinrichtung und einer Fläche der zweiten Komponente (30), die näher an der ersten Komponente (40) liegt als die Fläche der Kopplungseinrichtung, und an diesen verkeilt werden, um so die zwei Komponenten (30, 40) aneinander zu fixieren.

5. Verbindervorrichtung nach Anspruch 4, wobei die Verbindungseinrichtung (28) in Funktion einen Klemmteil näher an den anderen Klemmteil ziehen kann, um so die Keileinrichtungen in Funktion zwischen den Flächen der Kopplungseinrichtung (2) und der zweiten Komponente (30) und an ihnen zu verkeilen.

6. Verbindervorrichtung nach einem der vorangehenden Ansprüche, wobei die Verbindungseinrichtung (28) in Funktion einen Klemmteil näher an den anderen Klemmteil ziehen kann und wenigstens ein Klemmteil (6, 7) einen Anschlagteil (14, 16) aufweist, der so eingerichtet ist, dass er an einem gegenüberliegenden Teil der Kopplungseinrichtung anschlägt, wenn er daran festgeklemmt ist, wobei wenigstens der Anschlagteil oder der gegenüberliegende Teil eine Fläche aufweist, die so geformt ist, dass durch den Vorgang des Ziehens durch die Verbindungseinrichtung der Anschlagteil über den gegenüberliegenden Teil gezogen wird, um so die Kopplungseinrichtung auf die zweite Komponente (30) zu zu schieben.

7. Verbindervorrichtung nach einem der vorangehenden Ansprüche, wobei die Kopplungseinrichtung (2) einen verbindenden Teil (4) hat, der so eingerichtet ist, dass er an der einen der zwei Komponenten befestigt wird, die an einem verlängerten Teil (5) angebracht ist, der so eingerichtet ist, dass er durch die Klemmeinrichtung aufgenommen wird, und die Klemmteile (6, 7) der Klemmeinrichtung so geformt und eingerichtet sind, dass sie den verlängerten Teil (5) wenigstens teilweise umschließen, wenn sie daran festgeklemmt sind.

8. Verbindervorrichtung nach einem der vorangehenden Ansprüche, wobei die Verbindungseinrichtung (28) in Funktion einen Klemmteil näher an den anderen Klemmteil ziehen kann und ein oder beide Klemmteile/e (6, 7) so verformt werden kann/können (25), dass er/sie sich durch den Vorgang des Festklemmens an der Klemmeinrichtung in einer Richtung quer zu der Richtung des Ziehens ausdehnt/ausdehnen.

9. Verbindervorrichtung nach Anspruch 8, wobei die Klemmeinrichtung so eingerichtet ist, dass sie in einer Bohrung (32) der zweiten Komponente (30) angeordnet wird und der eine oder beide Klemmteil/e (6, 7; 64, 74) so eingerichtet ist/sind, dass er/sie sich so ausdehnt/ausdehnen, dass der/die verlängerten Teil/e desselben/derselben in Funktion an die Bohrung gepresst werden kann/können, um so die Bohrung dort zu halten.

10. Verbindervorrichtung nach einem der Ansprüche 8 oder 9, wobei der eine oder beide Klemmtell/e (6, 7) einen elastisch verformbaren Abschnitt (25) enthält/enthalten, der so eingerichtet ist, dass er durch den Vorgang des Festklemmens an der Klemmeinrichtung in einer Richtung parallel zu der Richtung des Ziehens gequetscht wird und sich von dem/den Klemmteil/en nach außen ausdehnt.

11. Verbindervorrichtung nach einem der Ansprüche 8 bis 10, wobei der eine oder die beiden Klemmteil/e (6, 7) einen ersten Abschnitt, der beweglich mit einem zweiten Abschnitt in Eingriff kommt, sowie einen elastisch vertormbaren dritten Abschnitt (25) hat/haben, der in einem Raum zwischen dem ersten und dem zweiten Abschnitt angeordnet ist und so verformt werden kann, dass er von den Klemmabschnitten nach außen vorsteht, indem der erste und der zweite Abschnitt zusammengedrückt werden, um den Raum zu verkleinern.

12. Verbindervorrichtung nach Anspruch 11, wobei der dritte Abschnitt (25) so eingerichtet ist, dass er nicht von den Klemmabschnitten nach außen vorsteht, wenn der erste und der zweite Abschnitt des/der Klemmteils/e nicht zusammengedrückt werden.

13. Verbindervorrichtung nach einem der vorangehenden Ansprüche, wobei ein oder beide Klemmteile (6, 7) ein Führungselement (8, 9) hat/haben, das von ihm/ihnen vorsteht und gegenüber der Verbindungseinrichtung (28) versetzt ist und so eingerichtet ist, dass es in einer in dem anderen Klemmteil vorhandenen Bohrung aufgenommen wird, wenn sich die Klemme in dem zusammengesetzten Zustand befindet, wobei das Führungselement herausziehbar in die Bohrung eingeführt werden kann, um so die Bewegung des einen Klemmteils relativ zu dem anderen zu führen.

14. Verbindervorrichtung nach einem der vorangehenden Ansprüche, wobei ein oder beide Klemmteile (6, 7) einen Anschlagteil hat/haben, der so eingerichtet ist, dass er an einem gegenüberliegenden Teil der Kopplungseinrichtung anschlägt, wenn er daran festgeklemmt wird, und die Verbindungseinrichtung so eingerichtet ist, dass die Kopplungseinrichtung zwischen einem Anschlagteil und der Verbindungseinrichtung angeordnet werden kann, wenn sie sich in Funktion zwischen den Klemmteilen befindet.

15. Vorrichtung, die die Verbindervorrichtung (1) und die zweite Komponente (30) nach einem der vorangehenden Ansprüche umfasst, wobei die zweite Komponente eine Bohrung (32) enthält, die so eingerichtet ist, dass sie die Klemmeinrichtung so darin aufnimmt, dass sie für die Kopplungseinrichtung zugänglich ist, die Bohrung der zweiten Komponente eine Rinne (24) enthält, die in einer Fläche derselben ausgebildet ist und sich entlang wenigstens eines Teils der Länge der Bohrung erstreckt, und die Klemmeinrichtung einen Vorsprung (20, 21) hat, der so eingerichtet ist, dass er in der Rinne aufgenommen wird, wenn die Klemme in Funktion an der Kopplungseinrichtung festgeklemmt ist.

16. Vorrichtung, die die Verbindervorrichtung nach einem der vorangehenden Ansprüche 1 bis 14 enthält und die zwei Komponenten (30, 40) enthält.

17. Vorrichtung nach Anspruch 16, wobei die erste Komponente (40) ein Treppenpfosten ist und die zweite Komponente (30) eine Treppenpfostenuntersatz ist, der so eingerichtet ist, dass er mit dem Treppenpfosten verbunden ist.

18. Vorrichtung nach einem der vorangehenden Ansprüche in zusammengesetzter Form.

19. Verfahren zum lösbaren Befestigen von zwei Komponenten (40, 30) aneinander, das einschließt:
Befestigen einer Kopplungseinrichtung (2) an einer ersten (40) der zwei Komponenten;
Anordnen einer Klemmeinrichtung (3) in einer zweiten (30) der zwei Komponenten, so dass sie für die Kopplungseinrichtung zugänglich ist, wobei sie zwei Klemmteile (6, 7) aufweist;
Anordnen der Klemmteile an einander gegenüberliegenden Seiten der Kopplungseinrichtung;
wobei eine Verbindungseinrichtung (28) die zwei Klemmteile so verbindet, dass einer oder beide Klemmteile lösbar an der Kopplungseinrichtung festgeklemmt wird/werden, um so die zwei Komponenten lösbar aneinander zu befestigen, **dadurch gekennzeichnet, dass** die Verbindungseinrichtung in Funktion an die Kopplungseinrichtung angrenzend angeordnet ist, um Einführen und/oder Lösen der Kopplungseinrichtung in die/von der zusammengesetzte/n Klemmeinrichtung ohne Behinderung durch diese zu ermöglichen, wobei ein Klemmteil oder beide Klemmteile so angeordnet ist/sind, dass er/sie Herausziehen der Kopplungseinrichtung aus der Klemme behindert/behindern.

20. Treppengeländervorrichtung, die eine Vorrichtung nach einem der Ansprüche 1 bis 18 enthält.

21. Bausatz aus Teilen, der Vorrichtungen nach einem der Ansprüche 1 bis 18 oder 20 enthält.

22. Treppengeländer nach Anspruch 20 in zusammengesetzter Form.

## Revendications

1. Appareil de connexion (1) destiné à fixer deux composants (30, 40) l'un à l'autre et comprenant :
un moyen de couplage (2) agencé pour être fixé à un premier (30) desdits deux composants ;
un moyen de serrage (3) agencé pour être disposé à l'intérieur d'un second (30) desdits deux composants pour être accessible audit moyen de couplage et possédant deux parties de serrage (6, 7) pouvant être assemblées pour être disposées sur des côté différents dudit moyen de couplage par un moyen de liaison (28) adapté pour lier lesdits deux parties de serrage pour serrer de façon libérable une ou les deux parties de serrage au moyen de couplage pour ainsi fixer de façon libérable les deux composants l'un à l'autre, **caractérisé en ce que** le moyen de liaison (28) du moyen de serrage (3) est adapté pour être disposé de façon adjacente au moyen de couplage durant l'utilisation pour permettre l'insertion on la libération du moyen de couplage (2) à partir du moyen de serrage assemblé (3) sans obstruction par celui-ci, dans lequel une partie de serrage ou les deux parties de serrage (6, 7) peut/peuvent être agencée(s) pour empêcher la rétraction du moyen de couplage (2) à partir de l'élément de serrage, durant l'utilisation.

2. Appareil de connexion selon une quelconque revendication précédente, dans lequel le moyen de serrage est agencé de sorte que, lorsqu'il est assemblé, le moyen de liaison (28) soit disposé dans des emplacements autres qu'entre une partie du moyen de couplage et une région entre les parties de serrage à travers lesquelles ladite partie du moyen de couplage doit passer pour rétracter le moyen de couplage à partir du moyen de serrage assemblé,

3. appareil de connexion selon une quelconque revendication précédente, dans lequel ledit moyen de liaison (28) est adapté pour serrer de façon libérable les deux parties de serrage sur ledit moyen de couplage.

4. Appareil de connexion selon une quelconque revendication précédente, dans lequel ledit moyen de serrage comporte un moyen de cale (12, 13) adapté pour se caler, durant l'utilisation, entre et contre une surface (15, 17) du moyen de couplage et une surface du second composant (30) qui est plus près du premier composant que ladite surface du moyen de couplage pour ainsi fixer les deux composants (30, 40) l'un à l'autre.

5. Appareil de connexion selon la revendication 4, dans lequel le moyen de liaison (28) est utilisable pour tirer une partie de serrage plus près de l'autre partie de serrage pour ainsi caler ledit moyen de cale, durant l'utilisation, entre et contre des surfaces du moyen de couplage (2) et du second composant (30).

6. Appareil de connexion selon une quelconque revendication précédente, dans lequel le moyen de liaison (28) est utilisable pour tirer une partie de serrage plus près de l'autre partie de serrage et au moins une partie de serrage (6, 7) comporte une partie de butée (14, 16) adaptée pour être en butée sur une partie opposée du moyen de couplage lorsqu'elle est serrée sur celui-ci, dans lequel au moins une parmi la partie de butée et la partie opposée comporte une surface formée de sorte que, par action de ladite traction par l'intermédiaire du moyen de liaison, la partie de butée soit tirée sur la partie opposée pour ainsi pousser le moyen de couplage vers ledit second composant (30).

7. Appareil de connexion selon une quelconque revendication précédente, dans lequel le moyen de couplage (2) comporte une partie de connexion (4) agencée pour être fixée audit premier desdits deux composants fixé à une partie agrandie (5) agencée pour être reçue par le moyen de serrage, et les parties de serrage (6, 7) du moyen de serrage sont formées et adaptées pour entourer au moins partiellement la partie agrandie lorsqu'elles sont serrées sur celle-ci.

8. Appareil de connexion selon une quelconque revendication précédente, dans lequel le moyen de liaison (28) est utilisable pour tirer une partie de serrage plus près de l'autre partie de serrage et une, ou les deux, partie(s) de serrage (6, 7) est/sont déformable(s) (25) afin de s'agrandir dans un sens transversal au sens de ladite traction par action de serrage sur le moyen de couplage,

9. Appareil de connexion selon la revendication 8, dans lequel le moyen de serrage est agencé pour être disposé dans un alésage (32) dudit second composant (30), et ladite, ou lesdites deux, partie(s) de serrage (6, 7 ; 64, 74) est/sont agencée(s) pour s'agrandir de sorte que la ou les partie(s) agrandie(s) de celle(s)-ci puisse(nt) être comprimée(s) durant l'utilisation contre ledit alésage pour ainsi saisir ledit alésage à cet endroit.

10. Appareil de connexion selon une quelconque des revendications 8 ou 9, dans lequel la ou les deux partie(s) de serrage (6, 7) comprend/comprennent une partie déformable de façon élastique (25) agencée afin d'être écrasée dans un sens parallèle au sens de ladite traction par action de serrage sur le moyen de couplage, et pour s'agrandir vers l'extérieur de la ou des partie(s) de serrage,

11. Appareil de connexion selon une quelconque des revendications 8 à 10, dans lequel la ou les deux partie(s) de serrage (6, 7) une première partie en prise de façon mobile avec une deuxième partie et une troisième partie déformable de façon élastique (25) disposée à l'intérieur d'un espace entre les première et deuxième parties et étant déformable pour faire saillie vers l'extérieur des parties de serrage en poussant les première et deuxième parties ensemble pour réduire ledit espace.

12. Appareil de connexion selon la revendication 11, dans lequel la troisième partie (25) est agencée afin de ne pas faire saillie vers l'extérieur des parties de serrage lorsque les première et deuxième parties de la ou des partie(s) de serrage ne sont pas poussées ensemble.

13. Appareil de connexion selon une quelconque revendication précédente, dans lequel une ou les deux parties de serrage (6, 7) comporte(nt) un élément de guidage (8, 9) fraisant saillie à partir de celle(s)-ci et décalé par rapport au moyen de liaison (28), étant agencé pour être reçu à l'intérieur d'un alésage prévu dans l'autre partie de serrage lorsque l'élément de serrage est dans l'état assemblé, l'élément de guidage pouvant être inséré de façon rétractable dans l'alésage pour ainsi guider le mouvement d'une partie de serrage par rapport à l'autre.

14. Appareil de connexion selon une quelconque revendication précédente, dans lequel une ou les deux partie(s) de serrage (6, 7) comporte(nt) une partie de butée adaptée pour être en butée sur une partie opposée du moyen de couplage lorsqu'elle(s) est/sont serrée(s) sur celui-ci, le moyen de liaison étant agencé de sorte que le moyen de couplage puisse être disposé entre une partie de butée et le moyen de liaison lorsqu'il se trouve entre les parties de serrage durant l'utilisation.

15. Appareil comprenant ledit appareil de connexion (1) et ledit second composant (30) selon une quelconque revendication précédente, dans lequel ledit second composant comprend an alésage (32) adapté pour recevoir le moyen de serrage dans celui-ci pour être accessible audit moyen de couplage, l'alésage, du second composant comprenant une gorge (24) formée dans une surface de celui-ci et s'étendant sur au moins une partie de la longueur de dans lequel le moyen de serrage comporte une saillie (20,21) agencée pour être reçue dans la gorge lorsque l'élément de serrage est serré sur le moyen de couplage durant l'utilisation.

16. Appareil comprenant l'appareil de connexion selon une quelconque revendication précédente 1 à 14 et comprenant lesdits deux composants (30, 40),

17. Appareil selon la revendication 16, dans lequel ledit premier composant (40) est un poteau d'escalier et ledit second composant (30) est une base de poteau d'escalier agencée pour être connectée au poteau d'escalier.

18. Appareil selon une quelconque revendication précédente sous forme assemblée.

19. Procède de fixation libérable de deux composants (40, 30) l'un à l'autre comprenant les étapes consistant à :
fixer un moyen de couplage (2) à un premier (40) desdits deux composants ;
disposer un moyen de serrage (3) à l'intérieur d'un second (30) desdits deux composants pour être accessible audit moyen de couplage et possédant deux parties de serrage (6,7) ;
disposer les parties de serrage sur des côtés opposés dudit moyen de couplage;
avec un moyen de liaison (28), lier lesdits deux parties de serrage pour serrer de façon libérable une ou les deux parties de serrage sur le moyen de couplage pour ainsi fixer de façon libérable les deux composants l'un à l'autre, **caractérisé en ce que** le moyen de liaison du moyen de serrage est disposé de façon adjacente au moyen de couplage durant l'utilisation pour permettre l'insertion et/ou la libération du moyen de couplage. à partir du moyen de serrage assemblé sans obstruction par celui-ci, dans lequel une partie de serrage ou les deux parties de serrage (6, 7) est/sont agencée(s) pour empêcher la rétraction du moyen de couplage à partir de l'élément de serrage, durant l'utilisation.

20. Appareil de rampe d'escalier comprenant un appareil selon une quelconque des revendications 1 à 18.

21. Ensemble de pièces comprenant un appareil selon une quelconque des revendications 1 à 18 ou 20.

22. Rampe d'escalier selon la revendication 20 sous forme assemblée.
